(19) **Europäisches Patentamt / European Patent Office / Office européen des brevets**

(11) **EP 4 770 224 A1**

(12) **EUROPEAN PATENT APPLICATION**
published in accordance with Art. 153(4) EPC

(43) Date of publication:
01.07.2026 Bulletin 2026/27

(21) Application number: 24870258.1

(22) Date of filing: 23.08.2024

(51) International Patent Classification (IPC):
$H04W\ 64/00\ ^{(2009.01)}$    $H04W\ 24/00\ ^{(2009.01)}$

(52) Cooperative Patent Classification (CPC):
H04L 5/00; H04W 24/00; H04W 24/10;
H04W 64/00; H04W 72/40

(86) International application number:
PCT/CN2024/114290

(87) International publication number:
WO 2025/066712 (03.04.2025 Gazette 2025/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 28.09.2023 CN 202311290334

(71) Applicant: Huawei Technologies Co., Ltd.
Shenzhen, Guangdong 518129 (CN)

(72) Inventor: HUANG, Su
Shenzhen, Guangdong 518129 (CN)

(74) Representative: Grünecker Patent- und
Rechtsanwälte
PartG mbB
Leopoldstraße 4
80802 München (DE)

(54) **COMMUNICATION METHOD AND APPARATUS**

(57) This application relates to the field of communication technologies and provides a communication method and apparatus. The method includes: determining an RSSI of a first SL-PRS based on a symbol-level RSSI, and specifically includes: determining an RSSI of one or more first symbols (that is, a first RSSI); determining an RSSI of a first PSCCH (that is, a second RSSI), where the first PSCCH is associated with the first SL-PRS; determining an RSSI of one or more second PSCCHs (that is, a third RSSI), where the first PSCCH and the second PSCCH are on different subchannels; and determining a fourth RSSI based on the first RSSI, the second RSSI, and the third RSSI, where the fourth RSSI is the RSSI corresponding to the first SL-PRS. The fourth RSSI is determined based on the symbol-level RSSIs, thereby reducing complexity of determining the fourth RSSI.

Network device — First terminal device

S601: Second information (indicating that a first mode is supported)

S602: First information (indicating the first mode)

S603: Determine a first RSSI

S604: Determine a second RSSI

S605: Determine a third RSSI

S606: Determine a fourth RSSI (that is, an RSSI corresponding to a first SL-PRS) based on the first RSSI, the second RSSI, and the third RSSI

FIG. 6

**Description**

CROSS-REFERENCE TO RELATED APPLICATIONS

This application claims priority to Chinese Patent Application No. 202311290334.2, filed with the China National Intellectual Property Administration on September 28, 2023, and entitled "COMMUNICATION METHOD AND APPARATUS", which is incorporated herein by reference in its entirety.

TECHNICAL FIELD

This application relates to the field of communication technologies, and in particular, to a communication method and apparatus.

BACKGROUND

Channel congestion control is introduced in a protocol. A channel congestion control mechanism is that a terminal device controls a maximum quantity of transmission times, a maximum transmit power, and the like of data based on a channel busy rate (channel busy ratio, CBR). The CBR is a proportion of subchannels on which received signal strength indicators (received signal strength indicators, RSSIs) exceed a threshold in a measurement window.

Currently, to measure a CBR corresponding to a dedicated resource pool for sending a first sidelink (sidelink, SL) positioning reference signal (positioning reference signal, PRS) (which may be abbreviated as SL-PRS/SL PRS), an RSSI of the first SL-PRS on each resource element (resource element, RE) needs to be measured. An RSSI of the first SL-PRS is a sum of RSSIs of the first SL-PRS on all REs, so that the CBR can be determined based on the RSSI of the first SL-PRS. A dedicated resource pool of an SL-PRS is a sidelink resource pool for transmitting the SL PRS but not used for a physical sidelink shared channel (physical sidelink shared channel, PSSCH). It may be learned that, the terminal device determines an RSSI corresponding to the SL-PRS by using the RE as a granularity. In this way, complexity of determining the RSSI corresponding to the SL-PRS by the terminal device is high.

SUMMARY

Embodiments of this application provide a communication method and apparatus, to reduce complexity of determining an RSSI corresponding to an SL-PRS by a terminal device.

According to a first aspect, an embodiment of this application provides a communication method. The method may be performed by a terminal device (for example, a first terminal device), or may be performed by a software or hardware module (for example, a chip) in the terminal device. For ease of description, the following uses an example in which the first terminal device performs the method for description. The method includes: determining an RSSI (that is, a first RSSI) of one or more first symbols, where the one or more first symbols include a symbol for sending a first sidelink positioning reference signal SL-PRS; determining an RSSI (that is, a second RSSI) of a first PSCCH, where the first PSCCH is associated with the first SL-PRS; determining an RSSI (that is, a third RSSI) of one or more second PSCCHs, where the first PSCCH and the second PSCCH are on different subchannels; and determining an RSSI (that is, a fourth RSSI) corresponding to the first SL-PRS based on the first RSSI, the second RSSI, and the third RSSI.

It should be understood that, the first RSSI may be an average value of RSSIs of all of the one or more first symbols. The one or more first symbols may include a symbol used for automatic gain control AGC, or may not include the symbol used for AGC. Measurement on the RSSI of each symbol does not include a CP length corresponding to the symbol. A bandwidth (measurement bandwidth) corresponding to the first RSSI is a bandwidth of a resource pool for sending the first SL-PRS. The one or more first symbols include the symbol for sending the first SL PRS. The one or more first symbols are symbols for sending the first SL PRS. In this case, a second SL PRS is mapped to the same symbol as the first SL PRS. Alternatively, the one or more first symbols are a symbol that is for sending an SL-PRS and that is in a slot to which the first SL-PRS belongs. The one or more second PSCCHs are associated with (or correspond to) one or more second SL PRSs. In this case, the one or more second SL-PRSs are all mapped to the same slot as the first SL-PRS. Optionally, the second RSSI is an average value of RSSIs of all of N symbols included in the first PSCCH, and N is a positive integer. The third RSSI is an average value of RSSIs of all of M symbols included in the one or more second PSCCHs, and M is a positive integer. The symbol in embodiments of this application may be an OFDM symbol. The symbol may include an OFDM symbol used for AGC, or may not include the OFDM symbol used for AGC. Measurement on the RSSI of the symbol does not include a CP length corresponding to OFDM. A (measurement) bandwidth corresponding to the second RSSI is a bandwidth of a subchannel of the first PSCCH, or a (measurement) bandwidth corresponding to the third RSSI is a bandwidth of a subchannel corresponding to the second PSCCH. Alternatively, the measurement bandwidth corresponding to the second RSSI is a transmission bandwidth corresponding to the first PSCCH, and the (measurement) bandwidth corresponding to the third RSSI is a transmission bandwidth corresponding to the second PSCCH.

In this embodiment of this application, an RSSI of an SL-PRS is determined based on a symbol-level RSSI. This can reduce complexity of determining the RSSI, and improve efficiency of calculating the RSSI corresponding to the SL-PRS.

In a possible implementation, the determining the fourth RSSI based on the first RSSI, the second RSSI, and the third RSSI includes: determining a first ratio, where the first ratio is a ratio of the second RSSI to a first summation result, and the first summation result is a sum of the second RSSI and the third RSSI; and determining the fourth RSSI based on the first RSSI and the first ratio.

In a possible implementation, the fourth RSSI includes one of the following: a first product; a weighted summation result of a first product and the second RSSI; a second product; or a weighted summation result of a second product and the second RSSI, where the first product is a product of the first RSSI and the first ratio, and the second product is a product of the first RSSI, the first ratio, and a first scaling factor.

In the foregoing implementation, a plurality of manners of determining the fourth RSSI are provided, thereby enriching the manners of determining the fourth RSSI.

In a possible implementation, the first scaling factor includes one of the following: a first value; a second value; a third value; or a product of at least two of a first value, a second value, and a third value, where the first value is a quantity of groups of SL-PRS resources for time division multiplexing in one slot, the second value is a ratio of a quantity of symbols for sending the first SL-PRS to a quantity of the one or more first symbols, and the third value is pre-configured, predefined, or received from a network device.

In the foregoing implementation, a plurality of possible implementations of the first scaling factor are provided.

In a possible implementation, the method further includes: receiving first information, where the first information indicates a first mode, and the first mode indicates to determine the fourth RSSI based on the first RSSI.

In the foregoing implementation, after receiving the first information from the network device, the first terminal device may determine to determine the fourth RRSI in the first mode. In this way, another mode for determining the RSSI may be compatible.

In a possible implementation, the method further includes: sending second information, where the second information indicates that the first mode is supported.

In the foregoing implementation, after determining that the first terminal device supports the first mode, the network device indicates the first terminal device to determine the RSSI in the first mode. This ensures that the first terminal device can successfully determine the RSSI.

According to a second aspect, an embodiment of this application provides a communication method. The method may be performed by a terminal device (for example, a first terminal device), or may be performed by a software or hardware module (for example, a chip) in the terminal device. For ease of description, the following uses an example in which the first terminal device performs the method for description. The method includes: receiving third information, where the third information indicates to select a mode from a mode set, the mode indicates a manner of determining a fourth RSSI, the fourth RSSI is an RSSI corresponding to a first SL-PRS, and the mode set includes at least two of a first mode, a second mode, and a third mode.

In this embodiment of this application, the first terminal device may flexibly determine, based on an indication of a network side (for example, a network device), the mode used to determine the fourth RSSI, thereby improving flexibility of determining the fourth RSSI.

In a possible implementation, the method further includes: sending fourth information, where the fourth information indicates that at least one of the first mode, the second mode, and the third mode is supported.

In a possible implementation, the selected mode is the first mode; and the method further includes: determining a first RSSI, where the first RSSI is an RSSI of one or more first symbols, and the one or more first symbols include a symbol for sending a first sidelink positioning reference signal SL-PRS; determining a second RSSI, where the second RSSI is an RSSI of a first physical sidelink control channel PSCCH, and the first PSCCH is associated with the first SL-PRS; determining a third RSSI, where the third RSSI is an RSSI of one or more second PSCCHs, and the first PSCCH and the one or more second PSCCHs are on different subchannels; and determining a fourth RSSI based on the first RSSI, the second RSSI, and the third RSSI.

In a possible implementation, the one or more first symbols are the symbols for sending the first SL-PRS; the one or more second PSCCHs correspond to one or more second SL-PRSs, and the one or more second SL-PRSs are all mapped to the same symbol as the first SL-PRS.

In a possible implementation, the one or more first symbols are an OFDM symbol that is for sending an SL-PRS and that is in a slot to which the first SL-PRS belongs; the one or more second PSCCHs correspond to one or more second SL-PRSs, and the one or more second SL-PRSs are all mapped to the same slot as the first SL-PRS.

In a possible implementation, the determining the fourth RSSI based on the first RSSI, the second RSSI, and the third RSSI includes: determining a first ratio, where the first ratio is a ratio of the second RSSI to a first summation result, and the first summation result is a sum of the second RSSI and the third RSSI; and determining the fourth RSSI based on the first RSSI and the first ratio.

In a possible implementation, the fourth RSSI includes one of the following: a first product; a weighted summation result of a first product and the second RSSI; a second product; or a weighted summation result of a second product and the second RSSI, where the first product is a product of the first RSSI and the first ratio, and the second product is a product of the first RSSI, the first ratio, and a first scaling factor.

In a possible implementation, the first scaling factor includes one of the following: a first value; a second value; a third value; or a product of at least two of a first value, a second value, and a third value, where the first value is a quantity of the one or more first symbols, the second value is a ratio of a quantity of symbols for sending the first SL-PRS to a quantity of the one or more first symbols, and the third value is pre-configured, predefined, or received from a network device.

In a possible implementation, the selected mode is the second mode; and the method further includes: determining a second RSSI, where the second RSSI is an RSSI of a first physical sidelink control channel PSCCH, and the first SL-PRS is associated with the first PSCCH; and determining that the fourth RSSI is a product of the second RSSI and a second scaling factor.

In a possible implementation, the second scaling factor is pre-configured, predefined, or received from a network device.

In a possible implementation, a value of the second scaling factor is 1.

In a possible implementation, the selected mode is the third mode, and the method further includes: determining a fifth RSSI, where the fifth RSSI is an RSSI of the first SL-PRS on each of a plurality of resource elements REs, and the plurality of REs are REs corresponding to a symbol for transmitting the first SL-PRS; determining a second RSSI, where the second RSSI is an RSSI of a first physical sidelink control channel PSCCH, and the first SL-PRS is associated with the first PSCCH; and determining the fourth RSSI based on the RSSI of the first SL-PRS on each of the plurality of REs and the second RSSI.

According to a third aspect, an embodiment of this application provides a communication method. The method may be performed by a network device, or may be performed by a software or hardware module (for example, a chip) in the network device. For ease of description, the following uses an example in which the network device performs the method for description. The method includes: sending third information, where the third information indicates to select a mode from a mode set, the mode set includes at least two of a first mode, a second mode, and a third mode, the mode indicates a manner of determining a fourth RSSI, and the fourth RSSI is an RSSI of a first SL-PRS.

In a possible implementation, the method further includes: receiving fourth information, where the fourth information indicates that at least one of the first mode, the second mode, and the third mode is supported.

In a possible implementation, the first mode indicates to determine the fourth RSSI based on a first RSSI, where the first RSSI is an RSSI of one or more first symbols, and the one or more first symbols include a symbol for sending the first SL-PRS; the second mode indicates to determine the fourth RSSI based on a second RSSI, where the second RSSI is an RSSI of a first physical sidelink control channel PSCCH, and the first SL-PRS is associated with the first PSCCH; and the third mode indicates to determine the fourth RSSI based on a fifth RSSI, where the fifth RSSI is an RSSI of the first SL-PRS on each of a plurality of resource elements REs, and the plurality of REs are REs corresponding to the symbol for transmitting the first SL-PRS.

In a possible implementation, the selected mode is the first mode, the fourth RSSI is determined based on the first RSSI, the second RSSI, and the third RSSI, the first RSSI is an RSSI of one or more first symbols, the one or more first symbols include a symbol for sending the first SL-PRS, the second RSSI is an RSSI of the first PSCCH, the first SL-PRS is associated with the first PSCCH, and the third RSSI is an RSSI of one or more second PSCCHs, and the first PSCCH and one or more second PSCCHs are on different subchannels.

In a possible implementation, the fourth RSSI includes one of the following: a first product; a weighted summation result of a first product and the second RSSI; a second product; or a weighted summation result of a second product and the second RSSI, where the first product is a product of the first RSSI and the first ratio, and the second product is a product of the first RSSI, the first ratio, and a first scaling factor.

In a possible implementation, the first scaling factor includes one of the following: a first value; a second value; a third value; or a product of at least two of a first value, a second value, and a third value, where the first value is a quantity of the one or more first symbols, the second value is a ratio of a quantity of symbols for sending the first SL-PRS to a quantity of the one or more first symbols, and the third value is pre-configured, predefined, or received from a network device.

In a possible implementation, the selected mode is the second mode, and the fourth RSSI is determined based on the second RSSI. For example, the fourth RSSI is a product of the second RSSI and a second scaling factor.

In a possible implementation, the second scaling factor is pre-configured, predefined, or received from a network device.

In a possible implementation, the selected mode is the third mode; the fourth RSSI is determined based on the fifth RSSI and the second RSSI, the fifth RSSI is an RSSI of the first SL-PRS on each of a plurality of REs, and the plurality of REs are REs corresponding to a symbol for transmitting the first SL-PRS.

According to a fourth aspect, an embodiment of this application provides a communication apparatus. The communication apparatus may be the first terminal device in the first aspect, or a software module or a hardware module (like a chip) configured in the first terminal device, or an apparatus having a same function as the first terminal device. The communication apparatus includes a corresponding means (means) or module configured to perform the first aspect or any possible implementation. For example, the communication apparatus includes a processing module (sometimes also referred to as a processing unit) and a transceiver module (sometimes also referred to as a transceiver unit).

For example, the processing module is configured to determine a first RSSI, determine a second RSSI, determine a third RSSI, and determine a fourth RSSI based on the first RSSI, the second RSSI, and the third RSSI.

Optionally, the communication apparatus may further implement any one of the possible implementations in the first aspect. Details are not described herein again.

According to a fifth aspect, an embodiment of this application provides a communication apparatus. The communication apparatus may be the first terminal device in the second aspect, or a software module or a hardware module (like a chip) configured in the first terminal device, or an apparatus having a same function as the first terminal device. The communication apparatus includes a corresponding means (means) or module configured to perform the second aspect or any possible implementation. For example, the communication apparatus includes a processing module (sometimes also referred to as a processing unit) and a transceiver module (sometimes also referred to as a transceiver unit).

For example, the transceiver module is configured to receive third information under control of the processing module, where the third information indicates to select a mode from a mode set, the mode indicates a manner of determining a fourth RSSI, the fourth RSSI is an RSSI corresponding to a first SL-PRS, and the mode set includes at least two of a first mode, a second mode, and a third mode.

Optionally, the communication apparatus may further implement any one of the possible implementations in the second aspect. Details are not described herein again.

According to a sixth aspect, an embodiment of this application provides a communication apparatus. The communication apparatus may be the network device in the third aspect, or a software module or a hardware module (like a chip) configured in the network device, or an apparatus having a same function as the network device. The communication apparatus includes a corresponding means (means) or module configured to perform the third aspect or any possible implementation. For example, the communication apparatus includes a processing module (sometimes also referred to as a processing unit) and a transceiver module (sometimes also referred to as a transceiver unit).

For example, the transceiver module is configured to send third information under control of the processing module, where the third information indicates to select a mode from a mode set, the mode set includes at least two of a first mode, a second mode, and a third mode, the mode indicates a manner of determining a fourth RSSI, and the fourth RSSI is an RSSI of a first SL-PRS.

Optionally, the communication apparatus may further implement any one of the possible implementations in the third aspect. Details are not described herein again.

According to a seventh aspect, an embodiment of this application provides a communication apparatus. The communication apparatus includes a processor and an interface circuit, where the interface circuit is configured to receive a signal from another communication apparatus other than the communication apparatus and transmit the signal to the processor, or send a signal from the processor to another communication apparatus other than the communication apparatus; and the processor is configured to implement, by using a logic circuit or by executing code instructions, the communication method according to any one of the first aspect and any possible implementation thereof, the second aspect and any possible implementation thereof, or the third aspect and any possible implementation thereof.

In a specific implementation process, the communication apparatus may be a chip, and the processor may be a transistor, a gate circuit, a trigger, various logic circuits, or the like. A specific implementation of the processor is not limited in this embodiment of this application.

In an implementation, the communication apparatus may be a wireless communication device, to be specific, a computer device supporting a wireless communication function. Specifically, the wireless communication device may be a terminal, for example, a smartphone, or may be a radio access network device, for example, a base station. A system chip may also be referred to as a system on chip (system on chip, SoC), or briefly referred to as an SoC chip. A communication chip may include a baseband processing chip and a radio frequency processing chip. The baseband processing chip is also sometimes referred to as a modem (modem) or a baseband chip. The radio frequency processing chip is also sometimes referred to as a radio frequency transceiver (transceiver) or a radio frequency chip. In a physical implementation, some or all chips of the communication chip may be integrated into the SoC chip. For example, the baseband processing chip is integrated into the SoC chip, but the radio frequency processing chip is not integrated into the SoC chip. The interface circuit may be the radio frequency processing chip in the wireless communication device, and the processor may be the baseband processing chip in the wireless communication device.

In another implementation, the communication apparatus may be a part of devices in the wireless communication device, for example, an integrated circuit product like the system chip or the communication chip. The interface circuit may be an input/output interface, an interface circuit, an output circuit, an input circuit, a pin, a related circuit, or the like on the chip or a chip system. The processor may alternatively be embodied as a processing circuit or a logic circuit.

According to an eighth aspect, an embodiment of this application provides a communication apparatus. The communication apparatus includes a processor and a memory. The memory is configured to store one or more computer programs, the one or more computer programs include computer-executable instructions, and when the communication apparatus runs, the processor executes the one or more computer programs stored in the memory, so that the communication apparatus performs the communication method according to any one of the first aspect and any possible implementation thereof, the second aspect and any possible implementation thereof, or the third aspect and any possible implementation thereof.

Optionally, the communication apparatus further includes other components, for example, an antenna, an input/output module, and an interface. The components may be hardware, software, or a combination of software and hardware.

According to a ninth aspect, an embodiment of this application provides a chip system. The chip system includes a processor and an interface. The processor is configured to invoke instructions from the interface and run the instructions. When executing the instructions, the processor implements the communication method according to any one of the first aspect and any possible implementation thereof, the second aspect and any possible implementation thereof, or the third aspect and any possible implementation thereof.

According to a tenth aspect, an embodiment of this application provides a computer-readable storage medium. The computer-readable storage medium is configured to store a computer program or instructions. When the computer program or the instructions are run, the communication method according to any one of the first aspect and any possible implementation thereof, the second aspect and any possible implementation thereof, or the third aspect and any possible implementation thereof is implemented.

According to an eleventh aspect, an embodiment of this application provides a computer program product including instructions. When the computer program product runs on a computer, the communication method according to any one of the first aspect and any possible implementation thereof, the second aspect and any possible implementation thereof, or the third aspect and any possible implementation thereof is implemented.

For beneficial effects of any one of the technical solutions in the second aspect to the eleventh aspect, refer to the beneficial effects of the corresponding technical solution in the first aspect. Repeated content is not listed herein again.

BRIEF DESCRIPTION OF DRAWINGS

FIG. 1 is a diagram of an architecture of a communication system to which an embodiment of this application is applicable;

FIG. 2 is a diagram of an architecture of another communication system to which an embodiment of this application is applicable;

FIG. 3 is a diagram of an architecture of still another communication system to which an embodiment of this application is applicable;

FIG. 4 is a diagram of a network architecture to which an embodiment of this application is applicable;

FIG. 5 is a diagram of SL-PRS resource mapping;

FIG. 6 is a diagram of a communication method according to an embodiment of this application;

FIG. 7 is a diagram of SL-PRS resource mapping according to an embodiment of this application;

FIG. 8 is a diagram of another communication method according to an embodiment of this application;

FIG. 9 is a diagram of a structure of a communication apparatus according to an embodiment of this application;

FIG. 10 is a diagram of a structure of another communication apparatus according to an embodiment of this application; and

FIG. 11 is a diagram of a structure of still another communication apparatus according to an embodiment of this application.

DESCRIPTION OF EMBODIMENTS

To make objectives, technical solutions, and advantages in embodiments of this application clearer, the following further describes embodiments of this application in detail with reference to the accompanying drawings.

The following describes some terms in embodiments of this application, to facilitate understanding of a person skilled in the art.

1. Sidelink (sidelink, SL): is a link between terminal devices for communication based on a PC5 interface, and is similar to an uplink communication link or a downlink communication link. The sidelink in embodiments of this application may also be referred to as a side communication link, a side-link, a sidelink, a direct link, a side link, a secondary link, or the like.

For example, links for device-to-device (device-to-device, D2D) communication, long term evolution (long term evolution, LTE) vehicle-to-everything (vehicle-to-everything, V2X) communication, new radio (new radio, NR) V2X communication, and sidelink on unlicensed spectrum (Sidelink on unlicensed spectrum, SL-U) communication are all sidelinks.

2. Resource pool (resource pool): may be understood as a resource set, where resources are, for example, time-frequency resources. Frequency domain resources included in the resource pool are consecutive. Time domain resources included in the resource pool may be consecutive or inconsecutive. Different resource pools may be distinguished by using SL resource pool identifiers (for example, SL-ResourcePoolID) or resource pool indexes. The terminal device performs receiving on a resource pool (also referred to as a receive resource pool) for receiving, and performs sending on a resource pool (also referred to as a transmit resource pool) for sending. If resource pools have a same resource pool index, it may be considered that time-frequency resources in the resource pools completely overlap.

In a sidelink on unlicensed spectrum (Sidelink on unlicensed spectrum, SL-U), a frequency band is shared by terminal apparatuses in a plurality of forms. For example, an SL terminal apparatus, a wireless fidelity (wireless fidelity, Wi-Fi) terminal apparatus, and a Bluetooth terminal apparatus perform transmission in a same frequency band. Therefore, a concept of an SL-dedicated resource pool does not necessarily exist. The SL resource pool may also be understood as a resource set for SL transmission. In embodiments, the resource pool may also be referred to as a channel (channel), an operating channel (operating channel), a nominal channel (nominal channel bandwidth), or a bandwidth (bandwidth). In other words, the resource pool, the channel, and the bandwidth all represent the resource set for SL transmission.

Two resource selection modes of an NR SL are as follows.

Resource selection mode 1 (mode 1): a manner in which a network device selects an SL resource from the transmit resource pool for a transmit-end terminal device. The network device may select one or more (for example, three) SL resources from one transmit resource pool at a time. The resource pool may be configured by the network device, or configured by an upper layer, or pre-configured.

Resource selection mode 2 (mode 2): a manner in which the transmit-end terminal device selects an SL resource from the transmit resource pool. The transmit-end terminal device may select one or more (for example, three) SL resources at a time. The resource pool may be configured by the network device, or configured by the upper layer, or pre-configured.

A terminal device in a radio resource control (radio resource control, RRC) connected (connected) state may be configured by the network device to use the mode 1 or the mode 2, and a terminal device in an RRC idle (idle) state or inactive (inactive) state can use only the mode 2.

The SL resource pool for sending an SL-PRS may be classified into two types: a dedicated resource pool and a shared resource pool. A resource in the dedicated resource pool may be specially for transmitting the SL PRS. For example, to provide a possibility of a larger bandwidth, the resource is exclusively designed to ensure SL PRS transmission, and cannot be for transmitting a PSSCH. A resource in the shared resource pool may be for transmitting the PSSCH, or may be for transmitting the SL PRS. In a possible example, the terminal device may divide some symbols from symbols occupied by the PSSCH for sending the SL PRS.

3. Time domain resource: includes a symbol (symbol), a slot (slot), a mini-slot (mini-slot), a partial slot (partial slot), a sub-frame (sub-frame), a radio frame (frame) (or referred to as a frame), a sensing slot (sensing slot), or the like.

One slot may include at least one symbol, for example, 14 symbols or 12 symbols. There may be different types of slots, and quantities of symbols included in the different types of slots are different. For example, the mini-slot (mini slot) includes symbols whose quantity is less than 7, for example, two symbols, three symbols, or four symbols, and a common slot (slot) includes seven symbols or 14 symbols.

Based on different subcarrier spacings, symbol lengths may be different. Therefore, slot lengths may be different. For example, a length of a slot corresponding to a subcarrier spacing of 15 kHz is 0.5 ms, and a length of a slot corresponding to a subcarrier spacing of 60 kHz is 0.125 ms.

4. Frequency domain resource: includes a subchannel, a frequency band (band), a carrier (carrier), a bandwidth part (bandwidth part, BWP), a resource block (resource block, RB), a resource pool, or the like.

The subchannel is a minimum unit of a frequency domain resource occupied by a physical sidelink shared channel, and one subchannel may include one or more resource blocks RB. A bandwidth of a wireless communication system in frequency domain may include a plurality of RBs. For example, in possible bandwidths of an LTE system, quantities of included physical resource blocks (physical resource blocks, PRBs) may be 6, 15, 25, 50, or the like.

In frequency domain, one RB may include several subcarriers. For example, in an LTE and NR system, one RB includes 12 subcarriers, and each subcarrier spacing may be 15 kHz. Certainly, another subcarrier spacing may alternatively be used, for example, a subcarrier spacing of 3.75 kHz, 30 kHz, 60 kHz, or 120 kHz. This is not limited herein.

For the subcarrier (subcarrier) or a resource element (resource element, RE), the subcarrier or the RE is a minimum frequency resource unit on a specific symbol in a multicarrier system. In embodiments of this application, the RE may be a resource unit of a time-frequency resource, for example, may be considered as a minimum time-frequency resource unit. For example, one RE occupies one symbol in time domain, and occupies one subcarrier in frequency domain. In other words, one subcarrier in one symbol in time domain is one RE. In this application, the subcarrier and the resource element may be used interchangeably, and include same content.

5. Sidelink control signaling (sidelink control information, SCI): also referred to as sidelink control information. The SCI includes two-stage SCI, that is, first-stage SCI (1st-stage SCI) and second-stage SCI (2nd-stage SCI).

The first-stage SCI is carried on a physical sidelink control channel (physical sidelink control channel, PSCCH), and the first-stage SCI is for scheduling the second-stage SCI and the PSSCH. Because an SL is a distributed system, a receive-end terminal apparatus only can decode the PSSCH after correctly decoding the first-stage SCI. In embodiments of this application, information carried on the PSSCH is described as data channel information. The data channel information includes data information, the second-stage SCI, and the like.

To reduce complexity of blind detection (blind decoding) performed by the terminal apparatus on the PSCCH, a time-frequency resource position of the PSCCH is fixed, and a format of the first-stage SCI carried on the PSCCH is also unique. In other words, the terminal apparatus does not need to perform blind detection on the time-frequency resource position of the PSCCH, and does not need to perform blind detection on SCI in different formats. The terminal apparatus only detects, at the fixed time-frequency resource position of the PSCCH, whether the first-stage SCI exists. The PSCCH exists on all or a part of subchannels of each slot. For example, a time domain start position of one PSCCH is a $2^{nd}$ symbol used for SL transmission in each slot, and a quantity of consecutively occupied symbols is 2 or 3. A frequency domain start position of one PSCCH is an RB with a smallest index on each subchannel, and a quantity of consecutively occupied RBs is at least 10 and does not exceed a size of the subchannel.

For SL communication and a shared resource pool, the first-stage SCI may include a frequency domain resource assignment (frequency resource assignment) field and a time domain resource assignment (time resource assignment) field. The frequency domain resource assignment field indicates a frequency domain resource of the PSSCH, and the time domain resource assignment field indicates a time domain resource of the PSSCH. Optionally, the first-stage SCI further includes a resource reservation period (resource reservation period) field. The resource reservation period field indicates a period of the PSSCH for resource reservation. A value of the resource reservation period field is configured by a network device, pre-configured (pre-configuration), or predefined. For example, the network device indicates the time domain resource, the frequency domain resource, and the period that are of the PSSCH to the terminal apparatus by using radio resource control (radio resource control, RRC) signaling. Content indicated by the RRC signaling may be determined based on sl-ResourceReservePeriod.

For a dedicated resource pool, the first-stage SCI includes a time domain resource assignment (time resource assignment) field and an SL PRS resource indication field. The time domain resource assignment field indicates a reserved SL-PRS slot, and the SL PRS resource indication field indicates an index of a specific SL-PRS resource reserved in the reserved SL-PRS slot. Optionally, the first-stage SCI further includes a resource reservation period (resource reservation period) field. The resource reservation period field indicates a period of the SL PRS for resource reservation. A value of the resource reservation period field is configured by a network device, pre-configured (pre-configuration), or predefined. For example, the network device indicates the time domain resource, the frequency domain resource, and the period that are of the PSSCH to the terminal apparatus by using radio resource control (radio resource control, RRC) signaling. Content indicated by the RRC signaling may be determined based on sl-ResourceReservePeriod.

The second-stage SCI is carried on the PSSCH. The second-stage SCI does not occupy resources of the PSCCH, a demodulation reference signal (demodulation reference signal, DMRS), and a phase tracking reference signal (phase tracking reference signal, PT-RS). The second-stage SCI is mainly used for hybrid automatic repeat request (hybrid automatic repeat request, HARQ) feedback of an NR SL, for example, indicating related information such as a HARQ process number (process number), a source identifier (source ID), and a destination identifier (destination ID). A second-stage SCI format is indicated by a second-stage SCI format (2nd-stage SCI format) field in the first-stage SCI.

6. CBR: a proportion of subchannels on which SL received signal strength indicators (received signal strength indicators, RSSIs) exceed a threshold in a measurement window (SL Channel Busy Ratio (SL CBR) measured in slot n is defined as the portion of sub-channels in the resource pool whose SL RSSI measured by the UE exceed a (pre-)configured threshold sensed over a CBR measurement window).

7. RSSI: a received power of a signal (like an SL-PRS) on a specific resource. The resource may include a time domain resource and/or a frequency domain resource. The time domain resource includes, for example, a slot, a symbol, or a mini-slot. The symbol may be, for example, an orthogonal frequency division multiplexing (orthogonal frequency division multiplexing, OFDM) symbol.

8. SL-PRS CBR of a dedicated resource pool: a ratio of PSCCH resources on which SL RSSIs exceed a threshold in a measurement window to SL-PRS resources.

In embodiments of this application, unless otherwise specified, a quantity of nouns represents "a singular noun or a plural noun", that is, "one or more". "At least one" means one or more, and "a plurality of" means two or more. "And/or" describes an association relationship between associated objects, and indicates that three relationships may exist. For example, A and/or B may indicate the following three cases: Only A exists, both A and B exist, and only B exists, where A and B may be in a singular form or a plural form. The character "/" generally indicates an "or" relationship between the associated objects. For example, A/B indicates A or B. "At least one of the following items (pieces)" or a similar expression thereof indicates any combination of these items, including a single item (piece) or any combination of a plurality of items (pieces). For example, at least one of a, b, or c indicates a, b, c, a and b, a and c, b and c, or a, b, and c, where a, b, and c may be singular or plural.

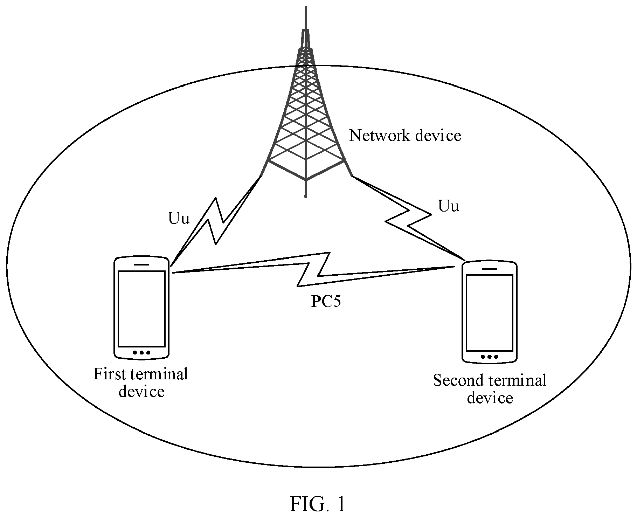

The solutions provided in embodiments of this application may be applied to an SL communication scenario. With reference to diagrams of architectures of the communication system shown in FIG. 1 to FIG. 3, the following describes an architecture (or may be considered as a scenario) of a communication system to which embodiments of this application are applicable. FIG. 1 to FIG. 3 may also be considered as diagrams of several scenarios to which embodiments of this application are applicable.

FIG. 1 shows an architecture in coverage of a network device. A PC5 connection is established between a first terminal device and a second terminal device, and the first terminal device and the second terminal device are separately connected to the network device (for example, a base station). It should be understood that, the first terminal device and the second terminal device may be connected to a same base station, or may be connected to different base stations. FIG. 1 shows an example in which the first terminal device and the second terminal device are connected to the same base station. In this embodiment of this application, the first terminal device may be connected to the network device through a Uu interface, and the second terminal device may be connected to the network device through a Uu interface. Each terminal device in the solution provided in an embodiment of this application may be, for example, a terminal device in coverage of the network device shown in FIG. 1. It should be understood that, FIG. 1 shows an example in which a quantity of terminal devices is 2. Actually, the quantity of terminal devices is not limited.

The terminal device may also be referred to as a terminal, a user equipment (user equipment, UE), a mobile station, a mobile terminal, or the like. The terminal device may be a fixed device, a mobile device, a handheld device, a wearable device, a vehicle-mounted device, or a wireless apparatus (for example, a communication module or a chip system) built in the foregoing device. The terminal device may be widely used in various scenarios, for example, self driving (self driving), telemedicine (telemedicine), smart grid (smart grid), smart furniture, smart office, smart wearable, smart transportation, smart city (smart city), a terminal device in a scenario like an unmanned aerial vehicle and a robot, device-to-device (device-to-device, D2D), vehicle-to-everything (vehicle-to-everything, V2X) communication, machine type communication (machine type communication, MTC), an internet of things (internet of things, IoT), virtual reality (virtual reality, VR), augmented reality (augmented reality, AR), industrial control (industrial control), self driving (self driving), telemedicine (telemedicine), smart grid (smart grid), autonomous driving, smart furniture, smart office, smart wearable, smart transportation, and smart city. The terminal device may be a mobile phone, a tablet computer, a computer with a wireless transceiver function, a wearable device, a vehicle, an unmanned aerial vehicle, a helicopter, an aircraft, a ship, a robot, a robot arm, a smart home device, a mobile station (mobile station, MS), a subscriber unit (subscriber unit), a cellular phone (cellular phone), a smartphone (smartphone), a wireless data card, a personal digital assistant (personal digital assistant, PDA) computer, a tablet-mode computer, a wireless modem (modem), a handheld device (handset), or a laptop computer (laptop computer), a machine type communication (machine type communication, MTC) terminal, or the like. A specific technology and a specific device form that are used by the terminal device are not limited in embodiments of this application. Optionally, the terminal device may further include a module that supports user plane security positioning. In this case, the terminal device may be considered as a terminal that can support a secure user plane location (secure user plane location, SUPL).

The network device may include an access network device and/or a core network device. The access network (access network, AN) device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, an access node in a wireless fidelity (wireless fidelity, Wi-Fi) system, or the like; or may be a module or a unit that completes a part of functions of the base station, for example, may be a central unit (central unit, CU), or may be a distributed unit (distributed unit, DU). The access network device may be a macro base station, may be a micro base station or an indoor base station, or may be a relay node, a donor node, or the like. A specific technology and a specific device form that are used by the access network device are not limited in embodiments of this application. In this embodiment of this application, an example in which the base station is used as the access network device is used for description.

In a possible scenario, a plurality of RAN nodes coordinate to assist a terminal in implementing radio access, and different RAN nodes separately implement a part of functions of a base station. For example, the RAN node may be a transmission receiving node (transmission and reception point, TRP), a transmission measurement function (transmission measurement function, TMF), a central unit (central unit, CU), a distributed unit (distributed unit, DU), a CU-control plane (control plane, CP), a CU-user plane (user plane, UP), or a radio unit (radio unit, RU). The CU and the DU may be separately disposed, or may be included in a same network element, for example, in a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, in an open radio access network (open radio access network, O-RAN, open RAN, or ORAN) system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any unit of the CU (or the CU-CP and the CU-UP), the DU, and the RU in this application may be implemented by using a software module, a hardware module, or a combination of a software module and a hardware module.

The access network device and the terminal device may be at fixed positions, or may be movable. The access network device and the terminal device may be deployed on the land, including an indoor device, an outdoor device, a handheld device, or a vehicle-mounted device; may be deployed on the water; or may be deployed on an airplane, a balloon, and an artificial satellite in the air. Application scenarios of the access network device and the terminal device are not limited in embodiments of this application.

The core network device is a device included in an access network. Positioning-related network elements in the core network mainly include: an access and mobility management function (access and mobility management function, AMF) network element, a location management function (location management function, LMF) network element, and the like. The network elements may further include an evolved serving mobile location center (evolved serving mobile location center, E-SMLC) network element, a unified data management (unified data management, UDM) network element, and an application function (application function, AF) network element.

In embodiments of this application, an apparatus configured to implement a function of the terminal device may be a terminal device, or may be an apparatus, for example, a chip system, that can support the terminal device in implementing the function, and the apparatus may be installed in the terminal device. Similarly, in embodiments of this application, an apparatus configured to implement a function of the network device may be a network device, or may be an apparatus, for example, a chip system, that can support the network device in implementing the function, and the apparatus may be installed in the network device. In the technical solutions provided in embodiments of this application, using an example in which the apparatus configured to implement the function of the terminal device is the terminal device, and the apparatus configured to implement the function of the network device is the network device, the technical solutions provided in embodiments of this application is described.

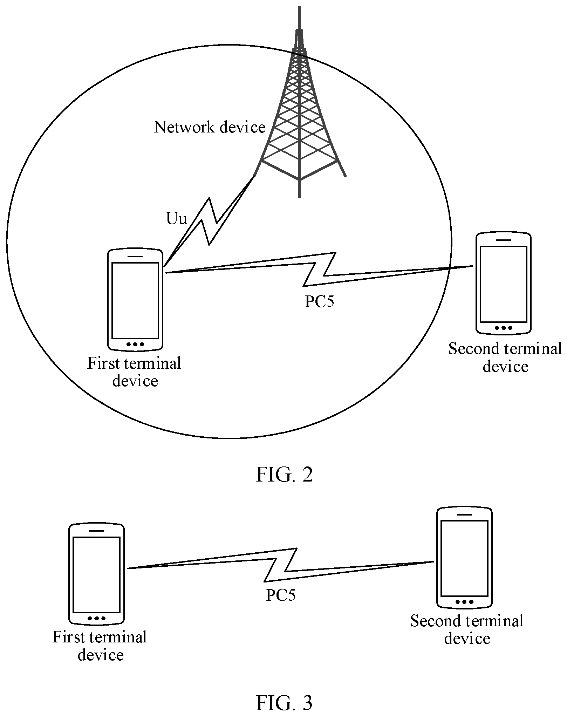

FIG. 2 shows a part of an architecture in coverage of a network device. A PC5 connection is established between a first terminal device and a second terminal device, a part of terminal devices are not connected to the network device (for example, a base station), and a remaining part of the terminal devices are connected to the network device (for example, a base station). The terminal device in the solution provided in an embodiment of this application may be a terminal device in coverage of the network device shown in FIG. 2, or may be a terminal device outside coverage of the network device shown in FIG. 2.

FIG. 3 shows an architecture outside coverage of a network device. A PC5 connection is established between a first terminal device and a second terminal device, and all terminal devices are not connected to the network device (for example, a base station).

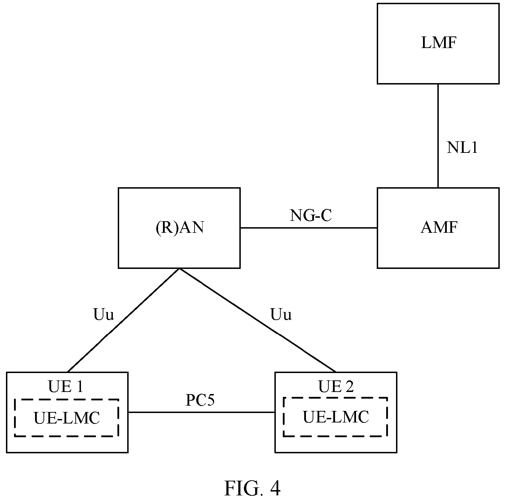

FIG. 4 is a diagram of a network architecture to which an embodiment of this application is applicable. FIG. 4 may also be considered as a diagram of a scenario to which embodiments of this application are applicable. As shown in FIG. 4, a possible network architecture to which this application is applicable may include three parts: terminal devices (for example, a UE 1 and a UE 2 shown in FIG. 4), an access network device (for example, a next generation (next generation, NG) radio access network ((radio) access network, (R)AN) device), and a core network (core network).

In this embodiment of this application, both the UE 1 and the UE 2 may include a user equipment (user equipment, UE)-positioning management component (location management component, LMC). The UE-LMC may be a component or an application that is deployed on the terminal device and that has some LMF functions, and is configured to support a positioning service of a PC5 interface. The LMCs of the UE 1 and the UE 2 in FIG. 4 are shown as a dashed line, and indicate that a terminal device side may include the LMCs, or may not include the LMCs. In FIG. 4, an example in which both the UE 1 and the UE 2 include the LMCs is used.

In this embodiment of this application, the UE 1 and the UE 2 shown in FIG. 4 may be the terminal devices in the communication systems shown in FIG. 1 to FIG. 3. For example, the UE 1 and the UE 2 may be the two terminal devices in the coverage of the network device shown in FIG. 1. For another example, a part of the UE 1 and the UE 2 shown in FIG. 4 may be the terminal device in the coverage of the network device shown in FIG. 2, and the other UEs may be the terminal device outside the coverage of the network device shown in FIG. 2. For still another example, the UE 1 and the UE 2 shown in FIG. 4 may be the two terminal devices outside the coverage of the network device shown in FIG. 3.

FIG. 4 shows that an access network includes an AMF and an LMF. The access network device may communicate with an AMF network element through an NG-C interface, and the AMF network element may be equivalent to a router for communication between a gNB and the LMF. The LMF network element may estimate a position of the terminal device, and the AMF communicates with the LMF through an NLs interface.

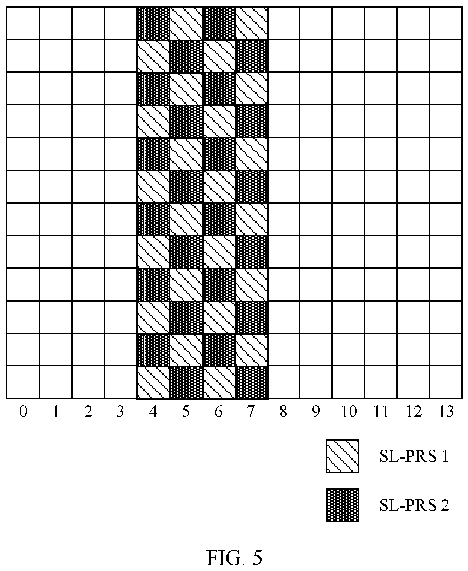

The following uses the UE 1 shown in FIG. 4 as an example to describe the manner of determining the RSSI corresponding to the SL-PRS in the background. FIG. 5 is a diagram of SL-PRS resource mapping. As shown in FIG. 5, an SL-PRS 1 and an SL-PRS 2 are alternately mapped to a symbol 4, a symbol 5, a symbol 6, and a symbol 7.

If a UE 1 is to determine the SL-PRS 1, the UE 1 needs to measure an RSSI on each RE corresponding to the SL-PRS 1. As shown in FIG. 5, RSSIs on 28 REs need to be determined, to determine an RSSI corresponding to the SL-PRS 1. Therefore, complexity of determining the RSSI corresponding to the SL-PRS 1 by the UE 1 is high.

In view of this, an embodiment of this application provides a communication method. In the method, an RSSI (for example, a first RSSI) of a first SL-PRS on one or more symbols may be determined, and an RSSI (for example, a second RSSI) of a first PSCCH associated with the first SL-PRS, and an RSSI (for example, a third RSSI) of one or more second PSCCHs may be determined, to determine an RSSI of the first SL-PRS. In other words, in this embodiment of this application, the RSSI of the SL-PRS is determined based on a symbol-level RSSI. This helps reduce complexity of determining the RSSI corresponding to the SL-PRS 1.

The following describes the method provided in this embodiment of this application with reference to the accompanying drawings. In the accompanying drawings corresponding to embodiments of this application, all steps represented by dashed lines are optional steps. In addition, a first terminal device in embodiments of this application is, for example, the first terminal device in FIG. 1 to FIG. 3 or the UE 1 in FIG. 4, a second terminal device is, for example, the second terminal device in FIG. 1 to FIG. 3 or the UE 2 in FIG. 4, and a network device is, for example, the network device in FIG. 1 or FIG. 2 or the access network device or the core network device in FIG. 3. If the technical solutions provided in embodiments of this application are applied to another communication system, a name and/or a function of the device may be changed. This is not limited herein.

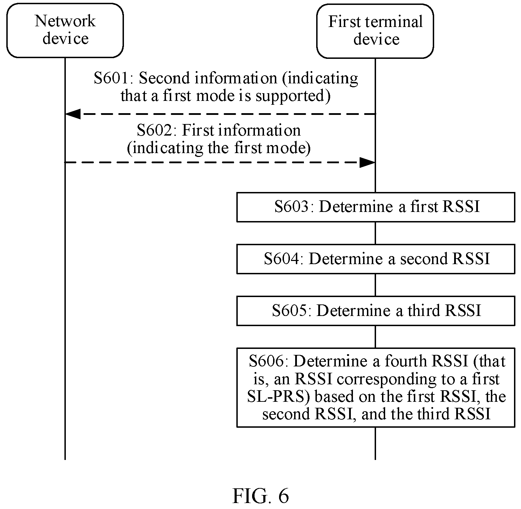

FIG. 6 is a diagram of a communication method according to an embodiment of this application. FIG. 6 shows steps S601 to S606, and the following separately describes the steps.

S601: A first terminal device sends second information to a network device. Correspondingly, the network device receives the second information from the first terminal device.

The second information may be carried in capability information of the first terminal device, or the second information may be considered as one piece of capability information of the first terminal device. The second information indicates that a first mode (mode) is supported, that is, indicates that the first terminal device supports the first mode. The first mode may also be referred to as a mode 1. The first mode may be considered as a manner of determining an RSSI (for example, a fourth RSSI) corresponding to a first SL-PRS. The fourth RSSI is the RSSI corresponding to the first SL-PRS, and may be considered as a weighted average value of RSSIs of the first SL-PRS on a plurality of REs and an RSSI of a PSCCH associated with the first SL-PRS. The plurality of REs include a RE for transmitting the first SL-PRS. The first mode indicates to determine the fourth RSSI based on a symbol-level RSSI (such as a first RSSI). The first RSSI is an RSSI of one or more first symbols.

The first RSSI may be an average value of RSSIs of the one or more first symbols. The one or more first symbols may be consecutive, or may be inconsecutive. This is not specifically limited herein.

The one or more first symbols include a symbol for sending the first SL-PRS. In other words, the first SL-PRS is mapped to at least one RE on a part or all of the one or more first symbols. The following describes implementations of the one or more first symbols with reference to content shown in A1 and A2.

A1: The one or more first symbols are the symbol for sending the first SL-PRS. In other words, the first SL-PRS is mapped to at least one RE corresponding to all of the one or more symbols.

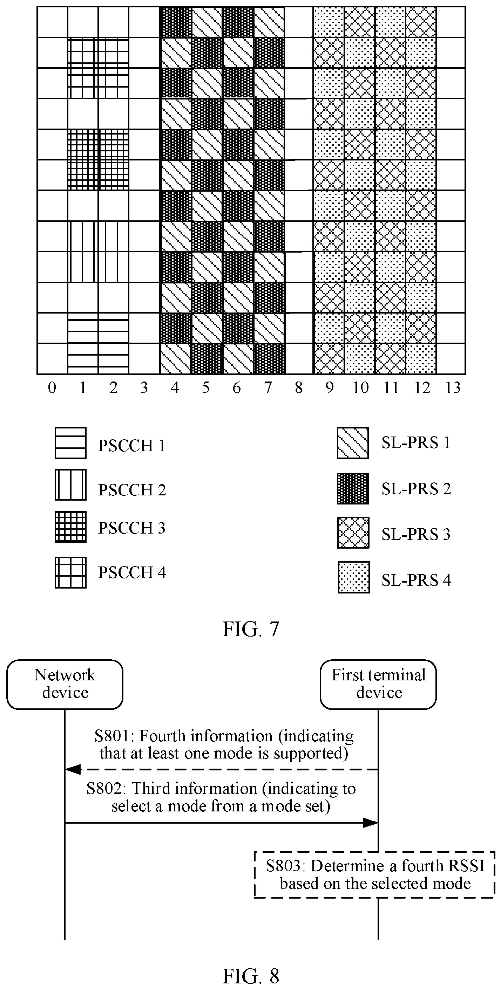

For example, FIG. 7 is a diagram of SL-PRS resource mapping according to an embodiment of this application. As shown in FIG. 7, both an SL-PRS 1 and an SL-PRS 2 are mapped to a symbol 4 to a symbol 7, and both an SL-PRS 3 and an SL-PRS 4 are mapped to a symbol 9 to a symbol 12. If the first SL-PRS is, for example, the SL-PRS 1 or the SL-PRS 2, the one or more symbols may include the symbol 4 to the symbol 7. If the first SL-PRS is, for example, the SL-PRS 3 or the SL-PRS 4, the one or more symbols may include the symbol 9 to the symbol 12.

A2: The one or more first symbols are a symbol that is for sending an SL-PRS and that is in a slot to which the first SL-PRS belongs.

The slot to which the first SL-PRS belongs may include one or more slots. This is not specifically limited in this embodiment of this application. In A2, the one or more first symbols include the symbol for sending the first SL-PRS, and optionally, further include a symbol that is for sending another SL-PRS and that is in the slot to which the first SL-PRS belongs.

Still using FIG. 7 as an example, if the first SL-PRS is, for example, the SL-PRS 1, and the slot to which the SL-PRS 1 belongs includes a symbol 0 to a symbol 13 shown in FIG. 7, the symbol that is for sending the SL-PRS and that is in the slot to which the first SL-PRS belongs specifically includes the symbol 4 to the symbol 7 and the symbol 9 to the symbol 12. Therefore, the one or more first symbols include the symbol 4 to the symbol 7 and the symbol 9 to the symbol 12.

Regardless of in A1 or in A2, the one or more first symbols each are an OFDM symbol. The one or more first symbols may include a symbol used for automatic gain control (automatic gain control, AGC) (for example, the symbol 3 and the symbol 8 in FIG. 7), or may not include the symbol used for AGC. This is not specifically limited in this embodiment of this application. An RSSI of a symbol does not include a cyclic prefix (cyclic prefix, CP) length corresponding to the OFDM symbol.

In a possible implementation, a bandwidth (or measurement bandwidth) corresponding to the first RSSI may be a bandwidth of a resource pool. The resource pool is a resource pool for sending the first SL-PRS. The resource pool in this embodiment of this application may be a dedicated resource pool.

S602: The network device sends first information to the first terminal device. Correspondingly, the first terminal device receives the first information from the network device.

The first information may be carried in radio resource control (radio resource control, RRC) signaling or dedicated signaling. This is not limited in this embodiment of this application. The first information indicates the first mode, or may be understood as indicating the first terminal device to use the first mode. In this way, the first terminal device may determine to use the first mode based on the first information, to determine the fourth RSSI.

In another possible implementation, the first terminal device may be pre-configured or predefined to determine the fourth RSSI in the first mode. In this case, the terminal device may not need to send the second information, and the network device does not need to send the first information. In other words, steps S601 and S602 do not need to be performed, that is, steps S601 and S602 are optional steps, and are shown by dashed lines in FIG. 6.

S603: The first terminal device determines the first RSSI.

For content of the first RSSI, refer to the content of the first RSSI in S601. Repeated content is not described herein again. The first RSSI may be considered as a symbol-level RSSI. The first RSSI may be the RSSI of the one or more symbols, or may be an average value of RSSIs of the one or more symbols, for example, an arithmetic average value or a weighted average value.

For example, the first terminal device may measure an RSSI of each of the one or more symbols. If the one or more symbols only include one symbol, the first terminal device may determine an RSSI of the symbol as the first RSSI. If the one or more symbols include a plurality of symbols, the first terminal device may determine an average value of RSSIs of all of the one or more symbols, to obtain the first RSSI. Alternatively, the first terminal device may directly measure a sum of the RSSIs of the one or more symbols, and divide the sum by a total quantity of the one or more symbols, to obtain the first RSSI.

Optionally, RSSIs of any two of the one or more symbols may be the same. For example, an RSSI corresponding to the symbol 0 is the same as an RSSI corresponding to the symbol 1. For example, this may be represented as $RSSI_{symbol,0} = RSSI_{symbol,1}$ , where $RSSI_{symbol,0}$ represents the RSSI corresponding to the symbol 0, and $RSSI_{symbol,0}$ represents the RSSI corresponding to the symbol 1.

S604: Determine a second RSSI.

The second RSSI is an RSSI of a first PSCCH. The first PSCCH is associated with (or corresponds to) the first SL-PRS. Alternatively, this may be described as that the first SL-PRS is associated with (or corresponds to) the first PSCCH. That the first PSCCH is associated with the first SL-PRS means that the first PSCCH indicates information about a resource for transmitting the first SL-PRS. In other words, to send a first PSCCH resource on a subchannel 0, a first SL-PRS resource needs to be sent. Still refer to FIG. 7. The SL-PRS 1 is associated with a PSCCH 1, the SL-PRS 2 is associated with a PSCCH 2, the SL-PRS 3 is associated with a PSCCH 3, and the SL-PRS 4 is associated with a PSCCH 4.

For example, the first terminal device measures a received power on all RBs corresponding to the first PSCCH or all RBs on a subchannel corresponding to the first PSCCH, and obtains the second RSSI by dividing the received power by a total quantity of N symbols corresponding to the first PSCCH, where N is a positive integer. In other words, the second RSSI is an average value of RSSIs of the N symbols corresponding to the first PSCCH, where the average value may be an arithmetic average value, a weighted average value, or the like.

Optionally, a bandwidth (or measurement bandwidth) corresponding to the second RSSI is a bandwidth of a subchannel corresponding to the first PSCCH, or a transmission bandwidth corresponding to the first PSCCH.

The N symbols are symbols in which the first PSCCH is located, and the N symbols may also be N OFDM symbols. Any one of the N OFDM symbols may include an OFDM symbol used for AGC, or may not include the OFDM symbol used for AGC. Measurement on an RSSI of any one of the N symbols does not include a CP length corresponding to the symbol.

S605: Determine a third RSSI.

The third RSSI is an RSSI of one or more second PSCCHs. The third RSSI is an average value of RSSIs of M symbols in which the second PSCCH is located, and M is a positive integer. The M symbols are symbols in which the one or more second PSCCHs are located, and M is a positive integer. The M symbols may also be M OFDM symbols. Any one of the M OFDM symbols may include an OFDM symbol used for AGC, or may not include the OFDM symbol used for AGC.

Measurement on an RSSI of any one of the M symbols does not include a CP length corresponding to the symbol. Any one of the one or more second PSCCHs and the first PSCCH are on different subchannels.

Optionally, if the bandwidth (or measurement bandwidth) corresponding to the second RSSI is the bandwidth of the subchannel corresponding to the first PSCCH, a bandwidth (or measurement bandwidth) corresponding to the third RSSI is a bandwidth of a subchannel corresponding to the second PSCCH. If the bandwidth (or measurement bandwidth) corresponding to the second RSSI is the transmission bandwidth corresponding to the first PSCCH, the bandwidth (or measurement bandwidth) corresponding to the third RSSI is a transmission bandwidth corresponding to the second PSCCH.

If the one or more symbols corresponding to the first RSSI are different, the one or more second PSCCHs are also different. The following separately describes cases shown in B1 and B2.

B1: If the one or more first symbols corresponding to the first RSSI are the symbol for sending the first SL-PRS, the one or more second PSCCHs are associated with one or more second SL-PRSs. In this case, the one or more second SL-PRSs are all mapped to the same symbol as the first SL-PRS.

Still as shown in FIG. 7, for example, the first SL-PRS is the SL-PRS 1. In this case, the one or more symbols corresponding to the first RSSI are the symbol 4 to the symbol 7. Therefore, the one or more second SL-PRSs are the SL-PRS 2, and the one or more second PSCCHs are the PSCCH 2.

B2: If the one or more first symbols corresponding to the first RSSI are the symbol that is for sending the SL-PRS and that is in the slot to which the first SL-PRS belongs, the one or more second PSCCHs are associated with one or more second SL-PRSs. In this case, the one or more second SL-PRSs are all mapped to the same slot as the first SL-PRS.

Still as shown in FIG. 7, for example, the first SL-PRS is the SL-PRS 1. In this case, the one or more symbols corresponding to the first RSSI include the symbol 4 to the symbol 7 and the symbol 9 to the symbol 12. Therefore, the one or more second SL-PRSs include the SL-PRS 2, the SL-PRS 3, and the SL-PRS 4, and correspondingly, the one or more second PSCCHs include the PSCCH 2, the PSCCH 3, and the PSCCH 4.

S606: Determine the fourth RSSI based on the first RSSI, the second RSSI, and the third RSSI. The fourth RSSI is an RSSI corresponding to the first SL-PRS.

For example, the first terminal device determines the fourth RSSI based on the first RSSI and a first ratio. The first ratio is a ratio of the second RSSI to a first summation result, and the first summation result is a sum of the second RSSI and the third RSSI. That the fourth RSSI is determined based on the first RSSI and the first ratio may specifically include any one of the following manners C1 to C4, and the following separately describes the manners.

C1: The fourth RSSI is a first product, where the first product is a product of the first RSSI and the first ratio.

In C1, for an example of a specific calculation formula of the fourth RSSI, refer to the following formula (1).

$$RSSI_{SL-PRS,i} = RSSI_{symbol,i} * \frac{RSSI_{PSCCH,i}}{\sum_{j \in J_i} RSSI_{PSCCH,j}} \qquad (1)$$

$RSSI_{SL-PRS,i}$ represents the fourth RSSI, $RSSI_{symbol,i}$ represents the first RSSI, $RSSI_{PSCCH,i}$ represents the second RSSI, $\sum_{j \in J_i} RSSI_{PSCCH,j}$ represents the sum of the second RSSI and the third RSSI, i is an index of a resource of the first SL-PRS, and j is an index of a resource of the PSCCH, for example, an index of a subchannel of the PSCCH.

In a possible implementation, C1 is applicable to determining the fourth RSSI in the case shown in A1.

For example, still using FIG. 7 as an example, the calculation manner shown in C1 is described by using an example in which the one or more symbols include the symbol 4 to the symbol 7.

The first terminal device may measure the first RSSI. In this case, the first RSSI may be an average value of RSSIs of the symbol 4 to the symbol 7. The first terminal device may measure the second RSSI. In this case, the second RSSI may be an average value of RSSIs of the PSCCH 1 in the symbol 1 and the symbol 2. In addition, the first terminal device may measure the third RSSI. In this case, the third RSSI may be an average value of RSSIs of the PSCCH 2 in the symbol 1 and the symbol 2. The first terminal device may obtain the fourth RSSI according to the foregoing formula (1).

C2: The fourth RSSI is a second product, where the second product is a product of the first RSSI, the first ratio, and a first scaling factor.

In C2, for an example of a specific calculation formula of the fourth RSSI, refer to the following formula (2).

$$RSSI_{SL-PRS,i} = \alpha_i * RSSI_{symbol} * \frac{RSSI_{PSCCH,i}}{\sum_j RSSI_{PSCCH,j}} \qquad (2)$$

$J_1$ represents the first scaling factor.

The first scaling factor may be any one of the following D1 to D4, and the following separately describes D1 to D4.

D1: A first value.

The first value may be a quantity of groups of SL-PRS resources for time division multiplexing in one slot. One slot may include L groups of SL-PRS resources, and any two groups of SL-PRSs in the L groups of SL-PRSs are mapped to different symbols in a time division multiplexing manner. In each group of SL-PRS resources, X SL-PRSs may be mapped, and any two of the X SL-PRSs are mapped to a same symbol in at least one of frequency division, combing, and code division manners. Both L and X are positive integers. The combing may also be considered as a special type of the frequency division. The first value is, for example, 2.

D2: A second value.

The second value is a ratio of a quantity of symbols for sending the first SL-PRS to a quantity of the one or more first symbols.

D3: A third value.

The third value may be pre-configured or predefined in the first terminal device, or may be received by the first terminal device from a first communication apparatus.

D4: A product of at least two of a first value, a second value, and a third value.

In a possible implementation, C2 is applicable to determining the fourth RSSI in the case shown in A2.

For example, still using FIG. 7 as an example, the calculation manner shown in C2 is described by using an example in which the one or more symbols include the symbol 4 to the symbol 7 and the symbol 9 to the symbol 12.

The first terminal device may measure the first RSSI. In this case, the first RSSI may be an average value of RSSIs of the symbol 4 to the symbol 7 and the symbol 9 to the symbol 12. The first terminal device may measure the second RSSI. In this case, the second RSSI may be an average value of RSSIs of the PSCCH 1 in the symbol 1 and the symbol 2. In addition, the first terminal device may measure the third RSSI. In this case, the third RSSI may be an average value of RSSIs of the PSCCH 2 in the symbol 1 and the symbol 2, RSSIs of the PSCCH 3 in the symbol 1 and the symbol 2, and RSSIs of the PSCCH 4 in the symbol 1 and the symbol 2. The first terminal device may obtain the fourth RSSI according to the foregoing formula (2).

In C1 and C2, it may be considered that RSSIs of the first SL-PRS on occupied REs are allocated proportionally based on the RSSIs on the PSCCHs associated with the SL-PRS.

C3: The fourth RSSI is a weighted summation result of a first product and the second RSSI. For content of the first product, refer to content of the first product in C1.

In C3, the fourth RSSI may be a sum of a product of the first product and a first weighting coefficient and a product of the second RSSI and a second weighting coefficient. The first weighting coefficient is a weighting coefficient corresponding to the first product. The second weighting coefficient is a weighting coefficient corresponding to the second RSSI.

The first weighting coefficient may be pre-configured or predefined, or may be configured from the network device. For example, the first weighting coefficient is 1/2. The second weighting coefficient may be pre-configured or predefined, or may be configured from the network device. For example, the second weighting coefficient is 1/2. Optionally, a sum of the first weighting coefficient and the second weighting coefficient may be 1.

When the first weighting coefficient and the second weighting coefficient each are 1/2, for an example of a specific calculation formula of the fourth RSSI, refer to the following formula (3).

$$RSSI_{SL-PRS,i} = \frac{1}{2}\left(s1 + RSSI_{PSCCH,i}\right) \qquad (3)$$

M1 represents the first product.

Optionally, the first weighting coefficient is $\frac{1}{2} * \beta$ , and the second weighting coefficient is 1/2. $\beta$ is a specific parameter for compensating for a transmit power deviation between the first PSCCH and the first SL-PRS. When the first weighting coefficient is $\frac{1}{2} * \beta$ and the second weighting coefficient is 1/2, for an example of a specific calculation formula of the fourth RSSI, refer to the following formula (4).

$$RSSI_{SL-PRS,i} = \frac{1}{2}\left(s1 + \beta * RSSI_{PSCCH,i}\right) \qquad (4)$$

Optionally, the first weighting coefficient is $\gamma$, and the second weighting coefficient is (1-$\gamma$). $\gamma$ may represent a specific parameter for adjusting a weighting coefficient between the PSCCH and the SL-PRS. When the first weighting coefficient is $\gamma$ and the second weighting coefficient is (1-$\gamma$), for an example of a specific calculation formula of the fourth RSSI, refer to the following formula (5).

$$RSSI_{SL-PRS,i} = \frac{1}{2}\big(s1 + \beta * RSSI_{PSCCH,i}\big) \qquad (5)$$

When the first weighting coefficient is $\gamma$ and the second weighting coefficient is $(1 - \gamma) * \beta$, for an example of a specific calculation formula of the fourth RSSI, refer to the following formula (6).

$$RRSSI_{SL-PRS,i} = \gamma * s1 + (1 - \gamma) * \beta * RSSI_{PSCCH,i} \qquad (6)$$

In a possible implementation, C3 is applicable to determining the fourth RSSI in the case shown in A1.

C4: The fourth RSSI is a weighted summation result of a second product and the second RSSI. For content of the second product, refer to content of the second product in C2.

In C4, the fourth RSSI may be a sum of a product of the second product and a third weighting coefficient and a product of the second RSSI and the third weighting coefficient. The third weighting coefficient is a weighting coefficient corresponding to the second product. The fourth weighting coefficient is a weighting coefficient corresponding to the second RSSI.

The third weighting coefficient may be pre-configured or predefined, or may be configured from the network device. For example, the third weighting coefficient is 1/2. The fourth weighting coefficient may be pre-configured or predefined, or may be configured from the network device. For example, the fourth weighting coefficient is 1/2. Optionally, a sum of the third weighting coefficient and the fourth weighting coefficient may be 1.

When the third weighting coefficient and the fourth weighting coefficient each are 1/2, for an example of a specific calculation formula of the fourth RSSI, refer to the following formula (7).

$$RSSI_{SL-PRS,i} = \frac{1}{2}\big(s2 + RSSI_{PSCCH,i}\big) \qquad (7)$$

M2 represents the second product.

When the third weighting coefficient is $\frac{1}{2} * \beta$ and the fourth weighting coefficient is 1/2, for an example of a specific calculation formula of the fourth RSSI, refer to the following formula (8).

$$RSSI_{SL-PRS,i} = \frac{1}{2}\big(s2 + \beta * RSSI_{PSCCH,i}\big) \qquad (8)$$

When the third weighting coefficient is $\gamma$ and the fourth weighting coefficient is $(1-\gamma)$, for an example of a specific calculation formula of the fourth RSSI, refer to the following formula (9).

$$RSSI_{SL-PRS,i} = \frac{1}{2}\big(s2 + \beta * RSSI_{PSCCH,i}\big) \qquad (9)$$

When the third weighting coefficient is $\gamma$ and the fourth weighting coefficient is $(1 - \gamma) * \beta$, for an example of a specific calculation formula of the fourth RSSI, refer to the following formula (10).

$$RRSSI_{SL-PRS,i} = \gamma * s2 + (1 - \gamma) * \beta * RSSI_{PSCCH,i} \qquad (10)$$

In a possible implementation, C4 is applicable to determining the fourth RSSI in the case shown in A2.

Optionally, after determining the fourth RSSI, by analogy, the first terminal device may determine an RSSI of an SL-PRS on each subchannel, to determine a proportion of subchannels on which RSSIs exceed a first threshold in the resource pool for sending the first SL-PRS, to determine a CBR of the resource pool.

In this embodiment of this application, the first terminal device may measure a symbol-level RSSI instead of a RE-level RSSI, so that complexity of measuring the RSSI by the first terminal device may be reduced, which is conductive to measuring the RSSI corresponding to the SL-PRS by the first terminal device more quickly. In addition, when the SL-PRS is measured, the first terminal device may flexibly select a quantity of symbols corresponding to the RSSI to be measured, thereby improving flexibility of RSSI measurement. In addition, the first terminal device may further correct, based on the RSSI corresponding to the first PSCCH associated with the first SL-PRS, the RSSI corresponding to the first SL-PRS. This may improve accuracy of determining the fourth RSSI.

To provide flexibility of determining the RSSI corresponding to the SL-PRS, an embodiment of this application further provides a communication method. In the communication method, a first terminal device may receive third information, where the third information indicates to select a mode from a mode set, the mode set includes at least two of a first mode, a second mode, and a third mode, and the mode indicates a manner of determining a fourth RSSI. In this way, the first terminal device may flexibly determine, based on the third information, the manner of calculating the fourth RSSI, thereby improving flexibility of determining the fourth RSSI.

FIG. 8 is a diagram of a communication method according to an embodiment of this application. FIG. 8 shows steps S801 to S803, and the following separately describes the steps.

S801: A first terminal device sends fourth information to a network device. Correspondingly, the network device receives the fourth information from the first terminal device.

The fourth information may be carried in capability information of the first terminal device, or the fourth information may be considered as one piece of capability information of the first terminal device. The fourth information indicates that at least one of a first mode, a second mode, and a third mode is supported. The first mode may also be referred to as a mode 1, the second mode may be referred to as a mode 2, and the third mode may be referred to as a mode 3.

The mode may be considered as a manner of determining an RSSI (for example, a fourth RSSI) corresponding to a first SL-PRS. Correspondingly, the first mode, the second mode, and the third mode may be understood as three manners of determining the RSSI (for example, the fourth RSSI) corresponding to the first SL-PRS. For content of the fourth RSSI, refer to the content of the fourth RSSI in S601. Repeated content is not described herein again. For the first mode, refer to the content of the first mode described in S601. Repeated content is not described herein again. The following describes content of the second mode and the third mode.

The second mode indicates to determine the fourth RSSI based on an RSSI of a PSCCH. For example, the second mode specifically indicates to determine the fourth RSSI based on a second RSSI. The second RSSI is an RSSI of a first PSCCH, and the first SL-PRS is associated with the first PSCCH. For specific content of the second RSSI, refer to the content of the second RSSI described in the S604. The third mode indicates to determine the fourth RSSI based on an RSSI of a RE-level SL-PRS, and specifically, for example, the fourth RSSI is determined based on a fifth RSSI. The fifth RSSI is an RSSI of the first SL-PRS on each of a plurality of resource elements REs, and the plurality of REs are REs corresponding to a symbol for transmitting the first SL-PRS.

In another possible implementation, the first terminal device may be pre-configured or predefined to support the first mode, the second mode, the third mode, and the like. In this case, the fourth information does not need to be sent. In other words, step S801 does not need to be performed. Therefore, step S801 is an optional step, and is shown by dashed lines in FIG. 8.

S802: The network device sends third information to the first terminal device. Correspondingly, the first terminal device receives the third information from the network device.

The third information indicates to select a mode from a mode set. Alternatively, this may be understood as that the third information indicates the first terminal device to use a mode in the mode set to determine the fourth RSSI, or may be understood as that the third information indicates a mode used by the first terminal device to determine the fourth RSSI. The mode set includes the first mode, the second mode, and the third mode.

In a possible implementation, the third information indicates that the selected mode belongs to a mode that can be supported by the first terminal device. For example, a mode indicated by the third information is related to a mode indicated by the fourth information. The following provides example descriptions with reference to cases shown in D1 to D6.

D1: If the fourth information indicates that the first terminal device supports the first mode, the third information indicates that the selected mode is the first mode.

D2: If the fourth information indicates that the first terminal device supports the second mode, the third information indicates that the selected mode is the second mode.

D3: If the fourth information indicates that the first terminal device supports the first mode and the second mode, the third information indicates that the selected mode is the first mode or the second mode.

D4: If the fourth information indicates that the first terminal device supports the second mode and the third mode, the third information indicates that the selected mode is the second mode or the third mode.

D5: If the fourth information indicates that the first terminal device supports the first mode and the third mode, the third information indicates that the selected mode is the first mode or the third mode.

D6: If the fourth information indicates that the first terminal device supports the first mode, the second mode, and the third mode, the third information indicates that the selected mode is the first mode, the second mode, or the third mode.

In another possible implementation, the first terminal device is pre-configured or predefined to support the first mode, the second mode, the third mode, and the like. In this case, step S801 may not be performed. Therefore, S801 is an optional step. In this case, the third information indicates that the selected mode is the first mode, the second mode, or the third mode.

When the first terminal device supports at least two of the first mode, the second mode, and the third mode, the network device may also determine the one selected mode in a plurality of manners. The following describes an example.

E1: The network device determines, based on a processing resource available to the first terminal device, that the selected mode is a mode that adapts to the processing resource.

The processing resource available to the first terminal device may be sent by the first terminal device to the network device. For example, information about the available processing resource may be carried in the fourth information. If the first terminal device has fewer available processing resources, the network device may select a mode with lower complexity.

For example, if a quantity of available processing resources of the first terminal device is greater than or equal to a first quantity, the first terminal device determines that the selected mode is the third mode. Alternatively, if the quantity of available processing resources of the first terminal device is greater than or equal to a second quantity, and is less than the second quantity, the first terminal device determines that the selected mode is the second mode. Alternatively, if the quantity of available processing resources of the first terminal device is less than the second quantity, the first terminal device determines that the selected mode is the first mode. The first quantity is greater than the second quantity, and the first quantity and the second quantity may be pre-configured in the network device.

E2: The network device determines, based on a priority of the first SL-PRS, that the selected mode is a mode that adapts to the priority of the first SL-PRS.

The priority of the first SL-PRS is received by the network device from the first terminal device. For example, information about the priority of the first SL-PRS may be carried in the fourth information. If the priority of the first SL-PRS is lower, the network device may select the mode with lower complexity.

For example, if the priority of the first SL-PRS is higher than or equal to a first priority, it is determined that the selected mode is the third mode. Alternatively, if the priority of the first SL-PRS is higher than or equal to a second priority, and is lower than the first priority, it is determined that the selected mode is the second mode. Alternatively, if the priority of the first SL-PRS is lower than the first priority, it is determined that the selected mode is the first mode. The first priority is higher than the second priority.

It should be understood that, E1 and E2 are merely an example of a manner in which the network device selects a mode. Actually, the network device may select a mode in a plurality of manners. This is not specifically limited in this embodiment of this application.

S803: The first terminal device determines the fourth RSSI based on the selected mode.

The first terminal device may determine the selected mode based on the third information. If the selected modes are different, manners in which the first terminal device determines the fourth RSSI are also different. The following separately provides descriptions.

F1: If the selected mode is the first mode, the first terminal device may determine the fourth RSSI based on a first RSSI, the second RSSI, and a third RSSI.

The first RSSI is an RSSI of one or more first symbols, and the one or more first symbols include a symbol for sending the first SL-PRS. For content of the one or more symbols, refer to the content described in A1 or A2 in FIG. 6. Repeated content is not described herein again. The second RSSI is an RSSI of the first PSCCH, and the first SL-PRS is associated with the first PSCCH. The third RSSI is an RSSI of one or more second PSCCHs, and the first PSCCH and the one or more second PSCCHs are on different subchannels. For content of the first PSCCH and the one or more second PSCCHs, respectively refer to the content of the first PSCCH and the one or more second PSCCHs that are described in FIG. 6. Repeated content is not described herein again.

For the content that the first terminal device may determine the fourth RSSI based on the first RSSI, the second RSSI, and the third RSSI, refer to the content described in the S606. Repeated content is not described herein again.

F2: If the selected mode is the second mode, the first terminal device may determine the fourth RSSI based on the second RSSI.

For content of the second RSSI, refer to the content of the second RSSI in S604. Details are not described herein again. Because channel environment of the first PSCCH and that of the first SL-PRS are basically the same, and the first PSCCH and the first SL-PRS are associated with each other, in an ideal case, the second RSSI is equal to the fourth RSSI. Therefore, in F2, the second RSSI may be compensated to obtain the fourth RSSI. For example, the fourth RSSI is a product of the second RSSI and a second scaling factor.

In F2, for a calculation formula of determining the fourth RSSI, refer to the following formula (11).

$$RRSSI_{SL-PRS,i} = g \times RSSI_{PSCCH,i} \qquad (11)$$

$RSSI_{SL-PRS,i}$ represents the fourth RSSI, g represents the second scaling factor, and $RSSI_{PSCCH,i}$ represents the second RSSI.

Optionally, a value of the second scaling factor is, for example, 1. The second scaling factor may be pre-configured or predefined in the first terminal device, or may be obtained by the first terminal device from the network device.

F3: If the selected mode is the third mode, the first terminal device may determine the fourth RSSI based on the fifth RSSI and the second RSSI.

The fifth RSSI is the RSSI of the first SL-PRS on each of the plurality of REs, and the plurality of REs are the REs corresponding to the symbol for transmitting the first SL-PRS. For example, the first terminal device measures the RSSI of the first SL-PRS on each of the plurality of REs, to obtain the plurality of RSSIs, and sums the plurality of RSSIs to obtain the fifth RSSI. The first terminal device may perform weighted summation on the fifth RSSI and the second RSSI, to obtain the fourth RSSI. A weighting coefficient corresponding to the fifth RSSI and a weighting coefficient of the second RSSI may be pre-configured or predefined in the terminal device, or may be received from the network device. Optionally, a value of the weighting coefficient corresponding to the fifth RSSI may be a value of the foregoing first weighting coefficient, and a value of the weighting coefficient corresponding to the second RSSI may be a value of the foregoing second weighting coefficient.

The foregoing S803 is an optional step, and is shown by dashed lines in FIG. 8.

Optionally, after determining the fourth RSSI, by analogy, the first terminal device may determine an RSSI of an SL-PRS on each subchannel, to determine a proportion of subchannels on which RSSIs exceed a first threshold in a resource pool for sending the first SL-PRS, to determine a CBR of the resource pool.

In this embodiment of this application, the network device may flexibly indicate the mode used by the first terminal device to determine the fourth RSSI, thereby improving flexibility of determining the RSSI, and meeting compute requirements of different terminal devices.

It may be understood that, to implement the functions in the foregoing embodiments, a base station and a terminal include corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by hardware in a manner of hardware driven by computer software depends on particular application scenarios and design constraints of the technical solutions.

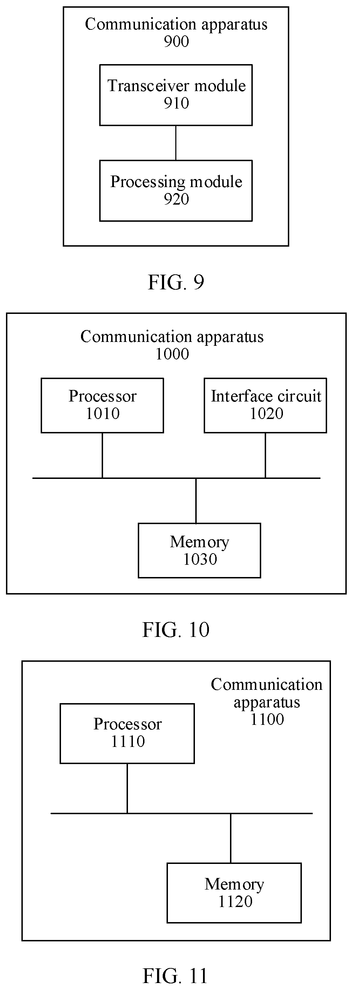

An embodiment of this application provides a communication apparatus. FIG. 9 is a diagram of a structure of a communication apparatus according to an embodiment of this application. The communication apparatus may be configured to implement the function of the terminal device or the network device in the foregoing method embodiments. Therefore, beneficial effects of the foregoing method embodiments can also be implemented. In embodiments of this application, the communication apparatus may be any terminal device shown in FIG. 1 to FIG. 3, may be the UE 1 or the UE 2 shown in FIG. 4, may be the network device shown in FIG. 1 or FIG. 2, may be the access network device, the AMF, the LMF, or the like in FIG. 4, or may be a module (for example, a chip) used in the terminal device or the network device.

As shown in FIG. 9, a communication apparatus 900 includes a transceiver module 910 and a processing module 920. The communication apparatus 900 is configured to implement the functions of the terminal device (for example, a first terminal device) or the network device in the method embodiment shown in FIG. 6 or FIG. 8.

In a first embodiment, when the communication apparatus 900 is configured to implement the function of the first terminal device in the method embodiment shown in FIG. 6, the processing module 920 may be configured to perform steps S603 to S606. Optionally, the transceiver module 910 may be configured to send second information and receive first information.

In a second embodiment, when the communication apparatus 900 is configured to implement the functions of the network device in the method embodiment shown in FIG. 6, the transceiver module 910 may receive second information, send first information, and the like under control of the processing module 920.

In a third embodiment, when the communication apparatus 900 is configured to implement the function of the first terminal device in the method embodiment shown in FIG. 8, the transceiver module 910 may be configured to receive third information. Optionally, the transceiver module 910 may be further configured to send fourth information, and the processing module 920 may be configured to perform step S803.

In a fourth embodiment, when the communication apparatus 900 is configured to implement the function of the network device in the method embodiment shown in FIG. 8, the transceiver module 910 may send third information and the like under control of the processing module 920. Optionally, the transceiver module 910 may receive fourth information under control of the processing module 920.

For more detailed descriptions about the transceiver module 910 and the processing module 920, directly refer to related descriptions in the method embodiments shown in FIG. 6 or FIG. 8. Details are not described herein again.

An embodiment of this application provides a communication apparatus. As shown in FIG. 10, a communication apparatus 1000 includes a processor 1010 and an interface circuit 1020. The processor 1010 and the interface circuit 1020 are coupled to each other. It may be understood that, the interface circuit 1020 may be a transceiver or an input/output interface. Optionally, the communication apparatus 1000 may further include a memory 1030 configured to store instructions to be executed by the processor 1010, store input data required by the processor 1010 to run the instructions, or store data generated after the processor 1010 runs the instructions.

When the communication apparatus 1000 is configured to implement the method shown in FIG. 6 or FIG. 8, the processor 1010 is configured to implement the function of the processing module 920, and the interface circuit 1020 is configured to implement the function of the transceiver module 910.

When the foregoing communication apparatus is a chip used in a terminal device, the chip implements the function of the terminal device (for example, a first terminal device) in the method embodiments. The chip receives information from another module (for example, a radio frequency module or an antenna) in the terminal device, where the information is sent by a network device to the terminal device. Alternatively, the chip sends information to another module (for example, a radio frequency module or an antenna) in a terminal, where the information is sent by the terminal device to a network device.

When the communication apparatus is a module used in a network device, the module implements the function of the network device in the foregoing method embodiments. The module receives information from another module (for example, a radio frequency module or an antenna) in the network device, where the information is sent by a terminal to the network device. Alternatively, the module sends information to another module (for example, a radio frequency module or an antenna) in the network device, where the information is sent by the network device to the terminal device. The module herein may be a baseband chip in the network device, or may be a DU or another module. The DU herein may be a DU in an open radio access network (open radio access network, O-RAN) architecture.

An embodiment of this application provides another example of a communication apparatus. The communication apparatus includes at least one processor and at least one memory. The at least one processor is coupled to the at least one memory. The at least one memory is configured to store instructions. When the instructions are executed by the at least one processor, the communication apparatus is caused to perform the method in the foregoing embodiments. For example, the communication apparatus includes one processor and one memory. Refer to a diagram of a structure of the communication apparatus shown in FIG. 11. The communication apparatus 1100 includes one processor 1110 and one memory 1120. The processor 1110 is coupled to the memory 1120. The memory 1120 stores instructions. When the instructions stored in the memory 1120 are executed by the processor 1110, the communication apparatus 1100 performs any one of the foregoing communication methods, for example, performs the communication method performed by the first terminal device or the network device in any one of embodiments, and specifically, for example, performs the communication method performed by the first terminal device or the network device in the embodiment shown in FIG. 6 or FIG. 8.

It may be understood that, the processor in embodiments of this application may be a central processing unit (central processing unit, CPU), or may be another general-purpose processor, a digital signal processor (digital signal processor, DSP), an application-specific integrated circuit (Application-specific integrated circuit, ASIC), a field programmable gate array (field programmable gate array, FPGA) or another programmable logic device, a transistor logic device, a hardware component, or any combination thereof. The general-purpose processor may be a microprocessor, any regular processor, or the like. The memory in embodiments of this application may include a volatile memory (volatile memory), for example, a random access memory (random access memory, RAM). The memory may further include a nonvolatile memory (nonvolatile memory), for example, a read-only memory (read-only memory, ROM), a flash memory, a hard disk drive (hard disk drive, HDD), or a solid-state drive (solid-state drive, SSD).

The method steps in embodiments of this application may be implemented in hardware, or may be implemented in software instructions executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk drive, a CD-ROM, or any other form of storage medium well-known in the art. For example, a storage medium is coupled to the processor, so that the processor can read information from the storage medium and write information into the storage medium. The storage medium may be a component of the processor. The processor and the storage medium may be disposed in an ASIC. In addition, the ASIC may be located in the base station or the terminal. The processor and the storage medium may exist in a base station or a terminal as discrete components.

All or a part of the foregoing embodiments may be implemented by using software, hardware, firmware, or any combination thereof. When software is used to implement embodiments, all or a part of embodiments may be implemented in a form of a computer program product. The computer program product includes one or more computer programs or instructions. When the computer programs or instructions are loaded and executed on a computer, procedures or functions in embodiments of this application are all or partially executed. The computer may be a general-purpose computer, a dedicated computer, a computer network, a network device, a user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk drive, or a magnetic tape; or may be an optical medium, for example, a digital video disc; or may be a semiconductor medium, for example, a solid-state drive. The computer-readable storage medium may be a volatile or nonvolatile storage medium, or may include two types of storage media: a volatile storage medium and a nonvolatile storage medium.

An embodiment of this application provides a chip system. The chip system includes a processor and an interface. The processor is configured to invoke instructions from the interface and run the instructions. When executing the instructions, the processor implements any one of the foregoing communication methods, for example, the communication method in FIG. 6 or FIG. 8.

An embodiment of this application provides a computer-readable storage medium. The computer-readable storage medium is configured to store a computer program or instructions. When the computer program or the instructions are run, any one of the foregoing communication methods, for example, the communication method in FIG. 6 or FIG. 8 is implemented.

An embodiment of this application provides a computer program product including instructions. When the computer program product runs on a computer, any one of the foregoing communication methods, for example, the communication method in FIG. 6 or FIG. 8 is implemented.

In various embodiments of this application, unless otherwise stated or if there is a logic conflict, terms and/or descriptions in different embodiments are consistent and may be mutually referenced, and technical features in different embodiments may be combined into a new embodiment based on an internal logical relationship thereof.

It may be understood that, various numbers in embodiments of this application are merely for differentiation for ease of description, and are not used to limit the scope of embodiments of this application. Sequence numbers of the foregoing processes do not mean an execution sequence, and the execution sequence of the processes should be determined based on functions and internal logic of the processes.

**Claims**

1. A communication method, wherein the method comprises:

   determining a first received signal strength indicator RSSI, wherein the first RSSI is an RSSI of one or more first symbols, and the one or more first symbols comprise a symbol for sending a first sidelink positioning reference signal SL-PRS;
   determining a second RSSI, wherein the second RSSI is an RSSI of a first physical sidelink control channel PSCCH, and the first PSCCH is associated with the first SL-PRS;
   determining a third RSSI, wherein the third RSSI is an RSSI of one or more second PSCCHs, and the first PSCCH and the second PSCCH are on different subchannels; and
   determining a fourth RSSI based on the first RSSI, the second RSSI, and the third RSSI, wherein the fourth RSSI is an RSSI corresponding to the first SL-PRS.

2. The method according to claim 1, wherein the one or more first symbols are the symbol for sending the first SL-PRS; and the one or more second PSCCHs are associated with one or more second SL-PRSs, and the one or more second SL-PRSs are all mapped to the same symbol as the first SL-PRS.

3. The method according to claim 1, wherein the one or more first symbols are a symbol that is for sending an SL-PRS and that is in a slot to which the first SL-PRS belongs; and the one or more second PSCCHs are associated with one or more second SL-PRSs, and the one or more second SL-PRSs are all mapped to the same slot as the first SL-PRS.

4. The method according to any one of claims 1 to 3, wherein the determining the fourth RSSI based on the first RSSI, the second RSSI, and the third RSSI comprises:

   determining a first ratio, wherein the first ratio is a ratio of the second RSSI to a first summation result, and the first summation result is a sum of the second RSSI and the third RSSI; and
   determining the fourth RSSI based on the first RSSI and the first ratio.

5. The method according to claim 4, wherein the fourth RSSI comprises one of the following:

   a first product;
   a weighted summation result of a first product and the second RSSI;
   a second product; or
   a weighted summation result of a second product and the second RSSI, wherein
   the first product is a product of the first RSSI and the first ratio, and the second product is a product of the first RSSI, the first ratio, and a first scaling factor.

6. The method according to claim 5, wherein the first scaling factor comprises one of the following:

a first value;
a second value;
a third value; or
a product of at least two of a first value, a second value, and a third value, wherein
the first value is a quantity of groups of SL-PRS resources for time division multiplexing in one slot, the second value is a ratio of a quantity of symbols for sending the first SL-PRS to a quantity of the one or more first symbols, and the third value is pre-configured, predefined, or received from a network device.

7. The method according to any one of claims 1 to 6, wherein the method further comprises:
receiving first information, wherein the first information indicates a first mode, and the first mode indicates to determine the fourth RSSI based on the first RSSI.

8. The method according to claim 7, wherein the method further comprises:
sending second information, wherein the second information indicates that the first mode is supported.

9. A communication method, wherein the method comprises:
receiving third information, wherein the third information indicates to select a mode from a mode set, the mode indicates a manner of determining a fourth received signal strength indicator RSSI, the fourth RSSI is an RSSI corresponding to a first sidelink positioning reference signal SL-PRS, and the mode set comprises at least two of a first mode, a second mode, and a third mode.

10. The method according to claim 9, wherein the method further comprises:
sending fourth information, wherein the fourth information indicates that at least one of the first mode, the second mode, and the third mode is supported.

11. The method according to claim 9 or 10, wherein the selected mode is the first mode, and the method further comprises:

determining a first RSSI, wherein the first RSSI is an RSSI of one or more first symbols, and the one or more first symbols comprise a symbol for sending the first sidelink positioning reference signal SL-PRS;
determining a second RSSI, wherein the second RSSI is an RSSI of a first physical sidelink control channel PSCCH, and the first SL-PRS is associated with the first PSCCH;
determining a third RSSI, wherein the third RSSI is an RSSI of one or more second PSCCHs, and the first PSCCH and the one or more second PSCCHs are on different subchannels; and
determining the fourth RSSI based on the first RSSI, the second RSSI, and the third RSSI.

12. The method according to claim 11, wherein the one or more first symbols are the symbol for sending the first SL-PRS; and the one or more second PSCCHs correspond to one or more second SL-PRSs, and the one or more second SL-PRSs are all mapped to the same symbol as the first SL-PRS.

13. The method according to claim 12, wherein the one or more first symbols are an OFDM symbol that is for sending an SL-PRS and that is in a slot to which the first SL-PRS belongs; and the one or more second PSCCHs correspond to one or more second SL-PRSs, and the one or more second SL-PRSs are all mapped to the same slot as the first SL-PRS.

14. The method according to any one of claims 11 to 13, wherein the determining the fourth RSSI based on the first RSSI, the second RSSI, and the third RSSI comprises:

determining a first ratio, wherein the first ratio is a ratio of the second RSSI to a first summation result, and the first summation result is a sum of the second RSSI and the third RSSI; and
determining the fourth RSSI based on the first RSSI and the first ratio.

15. The method according to claim 14, wherein the fourth RSSI comprises one of the following:

a first product;
a weighted summation result of a first product and the second RSSI;
a second product; or
a weighted summation result of a second product and the second RSSI, wherein

the first product is a product of the first RSSI and the first ratio, and the second product is a product of the first RSSI, the first ratio, and a first scaling factor.

16. The method according to claim 15, wherein the first scaling factor comprises one of the following:

   a first value;
   a second value;
   a third value; or
   a product of at least two of a first value, a second value, and a third value, wherein
   the first value is a quantity of the one or more first symbols, the second value is a ratio of a quantity of symbols for sending the first SL-PRS to a quantity of the one or more first symbols, and the third value is pre-configured, predefined, or received from a network device.

17. The method according to claim 9 or 10, wherein the selected mode is the second mode, and the method further comprises:

   determining a second RSSI, wherein the second RSSI is an RSSI of a first physical sidelink control channel PSCCH, and the first SL-PRS is associated with the first PSCCH; and
   determining the fourth RSSI as a product of the second RSSI and a second scaling factor.

18. The method according to claim 17, wherein the second scaling factor is pre-configured, predefined, or received from a network device.

19. The method according to claim 17 or 18, wherein a value of the second scaling factor is 1.

20. The method according to claim 9 or 10, wherein the selected mode is the third mode, and the method further comprises:

   determining a fifth RSSI, wherein the fifth RSSI is an RSSI of the first SL-PRS on each of a plurality of resource elements REs, and the plurality of REs are REs corresponding to a symbol for transmitting the first SL-PRS;
   determining a second RSSI, wherein the second RSSI is an RSSI of a first physical sidelink control channel PSCCH, and the first SL-PRS is associated with the first PSCCH; and
   determining the fourth RSSI based on the RSSI of the first SL-PRS on each of the plurality of REs and the second RSSI.

21. A communication method, wherein the method comprises:
   sending third information, wherein the third information indicates to select a mode from a mode set, the mode set comprises at least two of a first mode, a second mode, and a third mode, the mode indicates a manner of determining a fourth received signal strength indicator RSSI, and the fourth RSSI is an RSSI of a first sidelink positioning reference signal SL-PRS.

22. The method according to claim 21, wherein the method further comprises:
   receiving fourth information, wherein the fourth information indicates that at least one of the first mode, the second mode, and the third mode is supported.

23. The method according to claim 21 or 22, wherein

   the first mode indicates to determine the fourth RSSI based on a first RSSI, wherein the first RSSI is an RSSI of one or more first symbols, and the one or more first symbols comprise a symbol for sending the first SL-PRS;
   the second mode indicates to determine the fourth RSSI based on a second RSSI, wherein the second RSSI is an RSSI of a first physical sidelink control channel PSCCH, and the first SL-PRS is associated with the first PSCCH; and
   the third mode indicates to determine the fourth RSSI based on a fifth RSSI, wherein the fifth RSSI is an RSSI of the first SL-PRS on each of a plurality of resource elements REs, and the plurality of REs are REs corresponding to the symbol for transmitting the first SL-PRS.

24. A communication apparatus, wherein the apparatus comprises:

a module configured to perform the method according to any one of claims 1 to 8;
a module configured to perform the method according to any one of claims 9 to 20; or
a module configured to perform the method according to any one of claims 21 to 23.

25. A communication apparatus, comprising a processor and an interface circuit, wherein the interface circuit is configured to receive a signal from another communication apparatus other than the communication apparatus and transmit the signal to the processor, or send a signal from the processor to another communication apparatus other than the communication apparatus, and the processor is configured to implement, through a logic circuit or by executing code instructions, the method according to any one of claims 1 to 8, the method according to any one of claims 9 to 20, or the method according to any one of claims 21 to 23.

26. A computer-readable storage medium, wherein the storage medium stores a computer program or instructions, and when the computer program or the instructions are executed by a communication apparatus, the method according to any one of claims 1 to 8, the method according to any one of claims 9 to 20, or the method according to any one of claims 21 to 23 is implemented.

Network device

Uu

Uu

PC5

First terminal
device

Second terminal
device

FIG. 1

FIG. 2

FIG. 3

FIG. 4

FIG. 5

```
┌─────────────┐                          ┌─────────────┐
│   Network   │                          │First terminal│
│   device    │                          │   device    │
└──────┬──────┘                          └──────┬──────┘
       │    S601: Second information (indicating │
       │        that a first mode is supported)  │
       │◄ ─ ─ ─ ─ ─ ─ ─ ─ ─ ─ ─ ─ ─ ─ ─ ─ ─ ─ ─ │
       │        S602: First information          │
       │      (indicating the first mode)        │
       │─ ─ ─ ─ ─ ─ ─ ─ ─ ─ ─ ─ ─ ─ ─ ─ ─ ─ ─ ─►│
```

S603: Determine a first RSSI

S604: Determine a second RSSI

S605: Determine a third RSSI

S606: Determine a fourth RSSI (that is, an RSSI corresponding to a first SL-PRS) based on the first RSSI, the second RSSI, and the third RSSI

FIG. 6

| | | | | | | | | | | | | | |
|---|---|---|---|---|---|---|---|---|---|---|---|---|---|
| 0 | 1 | 2 | 3 | 4 | 5 | 6 | 7 | 8 | 9 | 10 | 11 | 12 | 13 |

| | | | |
|---|---|---|---|
| ▤ PSCCH 1 | | ▨ SL-PRS 1 | |
| ▥ PSCCH 2 | | ▦ SL-PRS 2 | |
| ▦ PSCCH 3 | | ▧ SL-PRS 3 | |
| ▦ PSCCH 4 | | ▨ SL-PRS 4 | |

FIG. 7

FIG. 8

Communication apparatus
900

Transceiver module
910

Processing module
920

FIG. 9

Communication apparatus
1000

Processor
1010

Interface circuit
1020

Memory
1030

FIG. 10

Communication
apparatus
1100

Processor
1110

Memory
1120

FIG. 11

## INTERNATIONAL SEARCH REPORT

| International application No. |
|---|
| **PCT/CN2024/114290** |

| A. | CLASSIFICATION OF SUBJECT MATTER |
|---|---|

H04W64/00(2009.01)i; H04W24/00(2009.01)i

According to International Patent Classification (IPC) or to both national classification and IPC

| B. | FIELDS SEARCHED |
|---|---|

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

3GPP, CNTXT, ENTXT, ENTXTC: 侧, 定位参考信号, 控制信道, 信号强度, 符号, sidelink, SL, PRS, positioning reference signal, PSCCH, SCI, RSSI, RSRP, RSRQ, symbol, ofdm, RE

| C. | DOCUMENTS CONSIDERED TO BE RELEVANT |
|---|---|

| Category* | Citation of document, with indication, where appropriate, of the relevant passages | Relevant to claim No. |
|---|---|---|
| A | LG ELECTRONICS. "Discussion on resource allocation for SL positioning reference signal" *3GPP TSG RAN WG1 Meeting #112bis-e, R1-2302928*, 10 April 2023 (2023-04-10), text, section 3 | 1-26 |
| A | ZTE. "Discussion on resource allocation for SL positioning reference signal" *3GPP TSG RAN WG1 #112bis-e, R1-2303278*, 07 April 2023 (2023-04-07), entire document | 1-26 |
| A | CN 116668937 A (HUAWEI TECHNOLOGIES CO., LTD.) 29 August 2023 (2023-08-29) entire document | 1-26 |
| A | CN 116709554 A (LG ELECTRONICS INC.) 05 September 2023 (2023-09-05) entire document | 1-26 |
| A | WO 2023122416 A1 (QUALCOMM INC.) 29 June 2023 (2023-06-29) entire document | 1-26 |
| A | WO 2023164317 A1 (QUALCOMM INC.) 31 August 2023 (2023-08-31) entire document | 1-26 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **23 September 2024** | **09 October 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

| International application No. |
| --- |
| **PCT/CN2024/114290** |

| Patent document cited in search report | | | Publication date (day/month/year) | Patent family member(s) | | | Publication date (day/month/year) |
| --- | --- | --- | --- | --- | --- | --- | --- |
| CN | 116668937 | A | 29 August 2023 | WO | 2023155887 | A1 | 24 August 2023 |
| CN | 116709554 | A | 05 September 2023 | US | 2023284173 | A1 | 07 September 2023 |
| | | | | EP | 4239930 | A1 | 06 September 2023 |
| | | | | KR | 20230129286 | A | 08 September 2023 |
| WO | 2023122416 | A1 | 29 June 2023 | IN | 202427032438 | A | 28 June 2024 |
| | | | | CN | 118451677 | A | 06 August 2024 |
| WO | 2023164317 | A1 | 31 August 2023 | IN | 202447050944 | A | 02 August 2024 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311290334